# EUROPEAN PATENT SPECIFICATION

(11) **EP 3 836 121 B1**
(45) Date of publication and mention of the grant of the patent: **11.12.2024**
(21) Application number: 20213666.9
(22) Date of filing: 14.12.2020
(51) Int. Cl.: G08G 1/005, G08G 1/01, G08G 1/16

(54) **TRAJECTORY PREDICTION**
TRAJEKTORIENVORHERSAGE
PRÉDICTION DE TRAJECTOIRE

(30) Priority: 13.12.2019 CN 201911282110
(43) Date of publication of application: 16.06.2021
(73) Proprietor: Robert Bosch GmbH, 70442 Stuttgart (DE)
(72) Inventor: LIANG, Jinyao, Shanghai, Shanghai 200335 (CN)

(56) References cited:
- CN-A- 110 146 100
- CN-A- 110 176 153
- US-B1- 10 235 882

## Description

### Technical Field

The present invention relates to a track prediction method and device, and in particular, to a track prediction method and device for a moving object, a track prediction method and device for a server side for communicating with a moving object, an automobile, a server, and a computer storage medium.

### Background Art

Traffic interconnection refers to the notion of connecting different traffic participants together. For example, a vehicle may be equipped with an on-board unit (OBU) so as to have sending and receiving functions. Other types of traffic participants may also have the ability to send their own data to a server, cloud, computing node, and/or edge computing node, or receive data from a server, cloud, computing node, and/or edge computing node. For example, an electric scooter may be equipped with a connection box for sending its own data. During the period of data sending and receiving, data sent by a moving object may include: current position and motion-related information, such as speed, acceleration, steering, and braking. On the server side, historical location data may be used to predict a future location of the moving object.

With the conventional track prediction method, a server side mainly uses historical trajectories and models to predict future trajectories. The track prediction method has the disadvantage that the accuracy of a track obtained by this method is low, because operations associated with moving objects, such as vehicles and pedestrians, fail to be effectively considered; however, in fact, operations associated with moving objects, such as movements performed by drivers or pedestrians, will directly affect future trajectories of moving objects, and the operations associated with moving objects may change over time.

Therefore, an improved method of track prediction is needed.

CN 110 146 100 A provides a track prediction method, a track prediction device and a storage medium, and belongs to the technical field of vehicle control. CN 110 176 153 A provides a blind area vehicle collision early warning method based on edge calculation.

### Summary of the Invention

According to the present invention, a method of track prediction performed by a track prediction device for a moving object is provided, as defined by independent claim 1.

Optionally, in the above-mentioned track prediction method, the first predicted track is determined by the server side based on report information on the moving object.

Optionally, in the above-mentioned track prediction method, report information on the moving object includes at least one or more of the following: current position of the moving object, current motion information on the moving object, current control information on the moving object, historical location of the moving object, historical motion information on the moving object, and historical control information on the moving object.

Optionally, in the above-mentioned track prediction method, the first predicted track and/or the second predicted track comprise at least one or more of the following: predicted position, predicted speed, predicted course, and predicted acceleration.

Optionally, in the above-mentioned track prediction method, operations performed by the driver include an accelerating operation and a braking operation.

Optionally, in the above-mentioned track prediction method, states of the moving object include engine speed, motor speed, and/or throttle state.

According to the present invention, a track prediction device for a moving object is provided, as defined by independent claim 7 .

Optionally, in the above-mentioned track prediction method, report information on the moving object includes at least one or more of the following: current position of the moving object, current motion information on the moving object, current control information on the moving object, historical location of the moving object, historical motion information on the moving object, and historical control information on the moving object.

Optionally, in the above-mentioned track prediction device, operations performed by the driver include an accelerating operation and a braking operation.

Optionally, in the above-mentioned track prediction device, states of the moving object include engine speed, motor speed, and/or throttle state.

According to an embodiment of the present invention, an automobile is provided, which comprises the above-described track prediction device for a moving object.

According to an embodiment of the present invention, a computer storage medium is provided. The medium comprises an instruction that, when executed, implements the above-described track prediction method. Preferred embodiments are covered by the appended dependent claims.

A track prediction solution provided by the present invention has at least the following effect: since operations associated with a moving object, such as operations performed by a driver or movements performed by a pedestrian, are considered, the final track prediction results are more accurate.

### Brief Description of the Drawings

The following detailed description in conjunction with the drawings will provide a fuller and clearer understanding of the above and other objectives and advantages of the present invention, wherein the same or similar elements are denoted by the same reference numerals.
Figure 1 shows a track prediction method for a moving object according to the present invention;
Figure 2 shows a schematic structural diagram for a track prediction device for a moving object according to the present invention;
Figure 3 shows a track prediction method of a server side for communicating with a moving object according to the present invention; and
Figure 4 shows a schematic structural diagram for a track prediction device for a server side for communicating with a moving object according to the present invention.

### Specific examples

In the context of the present invention, although exemplary embodiments are described, in which a plurality of units are used to perform exemplary processes, it should be understood that these exemplary processes may also be performed by one or more modules.

Moreover, a track prediction method of the present invention is contained on a computer-readable medium in the form of an executable program instruction that is implementable by a processor, etc. Examples of computer-readable media include, but are not limited to, ROMs, RAMs, optical disks, magnetic tapes, floppy disks, flash drives, smart cards, and optical data storage devices. A computer-readable recording medium may also be distributed in a computer system connected to a network, so that the computer-readable medium is stored and implemented in a distributed manner, for example, through a vehicle-mounted telecommunication service or a controller area network (CAN).

Unless particularly mentioned or made obvious from the context, as used herein, the term "about" is understood to be within a range of normal tolerance in the art, for example, within two standard deviations of a mean.

A track prediction solution according to various exemplary embodiments of the present invention will be described below in detail with reference to the accompanying drawings.

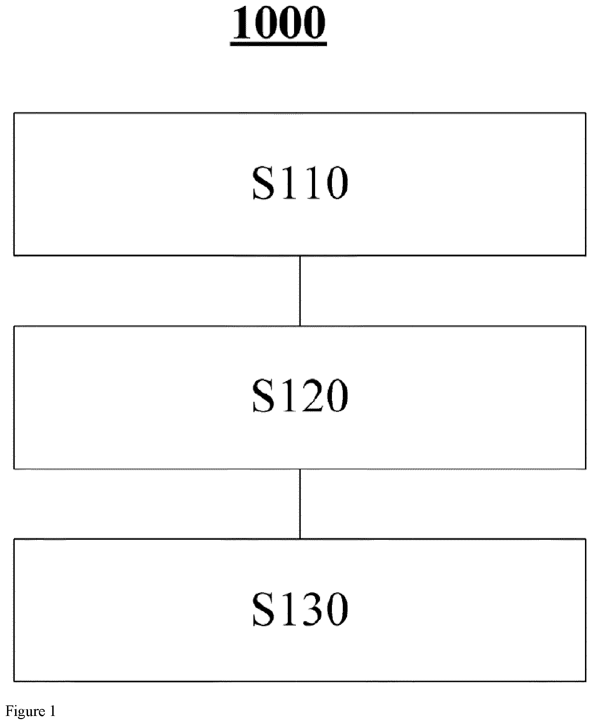

Figure 1 shows a track prediction method 1000 for a moving object according to an embodiment of the present invention. As shown in Figure 1, the method 1000 comprises the following steps:
step S110 of receiving a first predicted track of the moving object from a server side;
step S120 of changing the first predicted track at least based on an operation associated with the moving object, so as to acquire a second predicted track; and
step S130 of sending the second predicted track to the server side.

With the above-described track prediction method 1000, a predicted track is sent to a moving object through a server side, and the moving object changes, for example, calibrating, the received track, and then sends the changed predicted track back to the server side again. Thus, in the entire track prediction solution, the advantages of the high computing capabilities of a server side and the precise movement state of a moving object may be fully utilized. Moreover, in the above-described track prediction method 1000, since operations associated with a moving object, such as operations performed by a driver or movements performed by a pedestrian, are taken into consideration, the second predicted track finally acquired is more accurate.

In the context of the present invention, the term "server side" refers to any entity that may be communicatively connected to a moving object and is capable of serving the moving object. As an example, a "server side" may be any of the following: a server, a cloud, a computing node, an edge computing node, a vehicle, a roadside unit (RSU), a pedestrian, a motorcycle, a road worker with a communication apparatus, etc. In an embodiment, a "server side" is a server with high computing capabilities.

The term "moving object", as the name implies, refers to an object that is movable. In the context of the present invention, the term specifically refers to a traffic participant, for example, a vehicle (a non-motor vehicle or a motor vehicle) or a pedestrian.

The term "track" is also known as "driving condition", which means any information related to the driving condition of a moving object, including at least one or more of the following: position, speed, course, acceleration, etc.

Although not specifically shown in Figure 1, in one embodiment, the steps of the method 1000 shown in Figure 1 may be repeated iteratively. For example, the above-described track prediction method 1000 may further comprise:
receiving a third predicted track of the moving object from the server side, the third predicted track being determined at least based on the second predicted track;
changing the third predicted track at least based on the operation associated with the moving object, so as to acquire a fourth predicted track; and sending the fourth predicted track to the server side.

Since the above-mentioned track prediction method 1000 is performed iteratively, the benchmark used each time a server side performs track prediction reflects the actual situation more accurately, so that a predicted track of the server side can be more accurate.

In an embodiment, the first predicted track received in step S110 is determined by the server side based on report information on a moving object. As an example, report information on a moving object may include at least one or more of the following: current position of the moving object, current motion information on the moving object, current control information on the moving object, historical location of the moving object, historical motion information on the moving object, and historical control information on the moving object.

The first predicted track received in step S110 may also be determined by the server side based on another source of information. As an example, another source of information may be a roadside facility, for example, a camera, a radar, or a lidar. A camera can acquire track information on a moving object by computer vision. A radar can acquire track information on a moving object by inductive imaging. A track of a moving object provided by another source of information may include at least one or more of the following: current position of the moving object, current motion information on the moving object, historical location of the moving object, historical movement information on the moving object.

For example, a server side may perform track prediction at least based on one of the following data sources: (1) a report from a moving object (including current position, motion, and control); and (2) a historical track report on a moving object, wherein a report from a moving object may be a standardized report, for example, a report meeting the SAE J2735_2006.12 standard. A server side may have a memory storing a historical moving object track report.

A server side can perform track prediction by using various models, including, but not limited to, a machine learning model, an artificial intelligence model, a regression model, and a polynomial model. It should be pointed out that the content of the model is not limited in the context of the present patent.

In step S110, a moving object receives data from a server side through a communication port between the server side and the moving object. The communication port may be, for example, a dedicated short-range communication (DSRC) port or a long-term evolution vehicle (LTE-V) Uu/PC5 port. It should be pointed out that specifically which communication port or communication method is used is not limited in the context of the present patent.

Moreover, in an embodiment, a server side may conduct a unicast session with a moving object, and so the server side may send prediction data in a specific message frame to the moving object. In another embodiment, a server side conducts a broadcast/multicast session with a moving object, so that the server side uses a moving object ID and information for broadcast/multicast.

In an embodiment, a first predicted track and/or a second predicted track in the above-described track prediction method 1000 comprises at least one or more of the following: predicted position, predicted speed, predicted course, and predicted acceleration.

In an embodiment, the moving object is a motor vehicle or a non-motor vehicle, and an operation associated with the moving object is an operation performed by a driver. In another embodiment, in the above-described track prediction method, the moving object is a pedestrian, and an operation associated with the moving object is a movement performed by a pedestrian.

In an embodiment, step S120 further comprises: calculating a predicted track of a moving object based on both the current track of the moving object and an operation performed by the driver; and changing the first predicted track by using the moving object predicted track, so as to acquire the second predicted track. As an alternative embodiment, step S120 further comprises: calculating a moving object predicted track based on the current track of the moving object, an operation performed by the driver, and a state of the moving object; and changing the first predicted track by using the moving object predicted track, so as to acquire the second predicted track.

For example, a moving object receives, from the server side, a track of the moving object predicted by a server (that is, the first predicted track, Tra1). The moving object can calculate its own predicted track: the moving object predicted track Tra2. Tra2 may be calculated using not only its current track (for example, position and speed) but also an operation performed by a driver (for example, acceleration, deceleration, or shifting), and/or a state of a moving object (for example, engine speed or throttle status). The moving object, by considering the moving object predicted track Tra2, changes the first predicted track Tra1 and acquires a second predicted track Tra1'.

A change method (for example, a calibration method) may be combining a first predicted track Tra1 and a moving object predicted track Tra2 to acquire a second predicted track Tra1' (for example, by weighted combination), or using the moving object predicted track Tra2 as a baseline and considering an operation performed by a driver (or a combination of an operation performed by a driver and a state of a moving object) to acquire the second predicted track Tra1', thereby replacing the first predicted track Tra1. It should be pointed out that a change method on the moving object side is not limited in the context of the present patent.

In step S130, the moving object sends the second predicted track Tra1' to the server side. The transmission port or the sending port may be, for example, a dedicated short-range communication (DSRC) port or a long-term evolution vehicle (LTE-V) Uu/PC5 port, which is not limited in the present invention. Further, the server side can use the second predicted track Tra1' to change the first predicted track Tra1, so that a more accurate benchmark may be used for further predictions by the server side. A change method on the server side may, for example, allow replacement of the first predicted track Tra1 with the second predicted track Tra1', or the weighted combination of the second predicted track Tra1' and the first predicted track Tra1 into a new predicted track value. It should be pointed out that a method on the server side is not limited in the context of the present patent.

In an embodiment of the present invention, the volume of predicted track information may be set as needed; for example, the volume of predicted track information may be configured on the basis of the size of the required time window or a limit on the packet size of communication data. For example, a predicted track may comprise the position and speed in the next 1 second. In this case, if the sampling rate is 1 data set per second, then it may mean 1 data set (position, speed). Certainly, those of ordinary skill in the art may understand that the predicted track can also cover a longer period of time, for example, the next 10 seconds. At a sampling rate of 1 data set per second, this may mean 10 data sets.

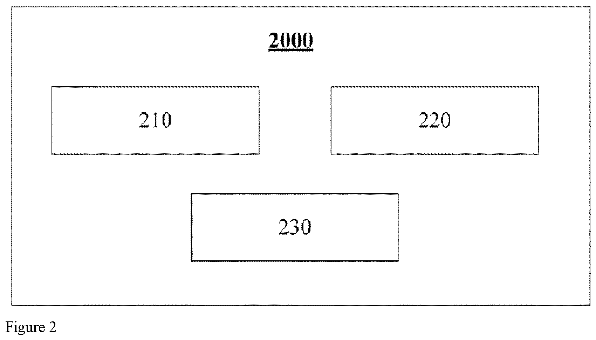

Figure 2 shows a track prediction device 2000 for a moving object according to an embodiment of the present invention. As shown in Figure 2, the track prediction device 2000 comprises: a first receiving apparatus 210, a first changing apparatus 220, and a first sending apparatus 230, wherein the first receiving apparatus 210 is configured to receive a first predicted track of the moving object from a server side; the first changing apparatus 220 is configured to change the first predicted track at least based on operations associated with the moving object, so as to acquire a second predicted track; and the first sending apparatus 230 is configured to send the second predicted track to the server side.

In the above-described track prediction device 2000, since operations associated with a moving object (for example, an operation performed by a driver or a movement performed by a pedestrian) are considered, a second predicted track acquired last is more accurate.

Although not specifically shown in Figure 2, in an embodiment, the track prediction device 2000 may further comprise: a second receiving apparatus for receiving a third predicted track of the moving object from the server side, the third predicted track being determined at least based on the second predicted track; a second changing apparatus for changing the third predicted track at least based on an operation associated with the moving object, so as to acquire a fourth predicted track; and a second sending apparatus for sending the fourth predicted track to the server side.

Since the process of determining a third predicted track is based on a second predicted track that has been changed on the moving object side, the benchmark used when the server side performs track prediction reflects the actual situation more accurately, so that a track predicted by the server side becomes more accurate. Those of ordinary skill in the art may understand that the track prediction device 2000 may comprise more devices to iteratively perform the above-described track prediction process, so that every time the server side performs track prediction, it can reflect the actual situation more accurately.

In an embodiment, a first predicted track received by the first receiving apparatus 210 is determined by the server side based on report information on the moving object. As an example, report information on a moving object may include at least one or more of the following: current position of the moving object, current motion information on the moving object, current control information on the moving object, historical location of the moving object, historical motion information on the moving object, and historical control information on the moving object.

For example, a server side may perform track prediction at least based on one of the following data sources: (1) a report from a moving object (including current position, motion, and control); and (2) a historical track report on a moving object, wherein a report from a moving object may be a standardized report, for example, a report meeting the SAE J2735_2006.12 standard. A server side may have a memory storing a past moving object track report.

A server side can perform track prediction by using various models, including, but not limited to, a machine learning model, an artificial intelligence model, a regression model, and a polynomial model. It should be pointed out that the content of the model is not limited in the context of the present patent.

The first receiving apparatus 210 receives data from the server side through a communication port between the server side and the moving object. The communication port may be, for example, a dedicated short-range communication (DSRC) port or a long-term evolution vehicle (LTE-V) Uu/PC5 port. It should be pointed out that specifically which communication port or communication method is used is not limited in the context of the present patent.

Moreover, in an embodiment, a server side may conduct a unicast session with a moving object, and so the server side may send prediction data in a specific message frame to the moving object. In another embodiment, a server side conducts a broadcast/multicast session with a moving object, so that the server side uses a moving object ID and information for broadcast/multicast.

In an embodiment, the first predicted track and/or the second predicted track comprise at least one or more of the following: predicted position, predicted speed, predicted course, and predicted acceleration.

In an embodiment, the moving object is a motor vehicle or a non-motor vehicle, and an operation associated with the moving object is an operation performed by a driver. In another embodiment, the moving object is a pedestrian, and an operation associated with the moving object is a movement performed by a pedestrian.

In an embodiment, the first changing apparatus 220 is configured to: calculate a predicted track of a moving object based on both the current track of the moving object and an operation performed by the driver; and change the first predicted track by using the moving object predicted track, so as to acquire the second predicted track. In an alternative embodiment, the first changing apparatus 220 is configured to: calculate a moving object predicted track based on the current track of the moving object, an operation performed by the driver, and a state of the moving object; and change the first predicted track by using the moving object predicted track, so as to acquire the second predicted track.

For example, the first receiving apparatus 210 receives a predicted track (namely, a first predicted track, Tra1) from the server side. Then, the first changing apparatus 220 may calculate its own predicted track: the moving object predicted track Tra2. It may be calculated using not only its current track (for example, position and speed) but also an operation performed by a driver (for example, acceleration or deceleration), and/or a state of a moving object (for example, engine speed or throttle status). Finally, the first changing apparatus 220, by considering the moving object predicted track Tra2, changes the first predicted track Tra1 and acquires the second predicted track Tra1'.

A modification method may be combining a first predicted track Tra1 and a predicted track Tra2 of the moving object to acquire a second predicted track Tra1' (for example, by weighted combination), or using the moving object predicted track Tra2 as a baseline and considering an operation performed by a driver (or a combination of an operation performed by a driver and a state of a moving object) to acquire the second predicted track Tra1', thereby replacing the first predicted track Tra1. It should be pointed out that a change method on the moving object side is not limited in the context of the present patent.

See Figure 2, which shows that the first sending apparatus 230 of the moving object sends the second predicted track Tra1' to the server side. The transmission port or the sending port may be, for example, a dedicated short-range communication (DSRC) port or a long-term evolution vehicle (LTE-V) Uu/PC5 port, which is not limited in the present invention. Further, the server side can use the second predicted track Tra1' to change the first predicted track Tra1, so that a more accurate benchmark may be used for further predictions by the server side. A change method on the server side may, for example, allow replacement of the first predicted track Tra1 with the second predicted track Tra1', or weighted combination of the second predicted track Tra1' and the first predicted track Tra1 into a new predicted track value. It should be pointed out that a method on the server side is not limited in the context of the present patent.

In an embodiment of the present invention, the volume of predicted track information may be set as needed; for example, the volume of predicted track information may be configured on the basis of the size of the required time window or a limit on the packet size of communication data. For example, a predicted track may comprise the position and speed in the next 1 second. In this case, if the sampling rate is 1 data set per second, then it may mean 1 data set (position, speed). Certainly, those of ordinary skill in the art may understand that the predicted track can also cover a longer period of time, for example, the next 10 seconds. At a sampling rate of 1 data set per second, this may mean 10 data sets.

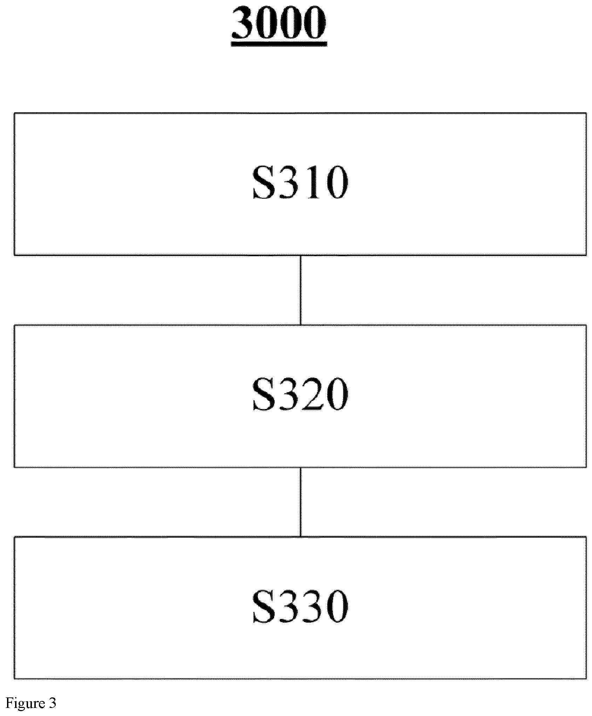

See Figure 3. Figure 3 shows a track prediction method 3000 for a server side for communicating with a moving object according to an embodiment of the present invention. The track prediction method 3000 may comprise the following steps: step S310 of calculating first track information on the moving object based on report information on the moving object; step S320 of sending the first track information to the moving object; and step S330 of receiving second track information from the moving object, wherein the second track information is acquired by changing the first track information at least based on an operation associated with the moving object.

Although not specifically shown in Figure 3, in an embodiment, the track prediction method 3000 may further comprise: acquiring third track information on the moving object at least based on the second track information; sending the third track information to the moving object; and receiving fourth track information from the moving object, wherein the fourth track information is acquired by changing the third track information at least based on an operation associated with the moving object, for example, an operation performed by a driver.

As an example, report information on a moving object may include at least one or more of the following: current position of the moving object, current motion information on the moving object, current control information on the moving object, historical location of the moving object, historical motion information on the moving object, and historical control information on the moving object.

It is thus clear that, corresponding to the track prediction method 1000 shown in Figure 1, which is intended for moving objects, the track prediction method 3000 shown in Figure 3 is implemented on server sides that communicate with moving objects, including, but not limited to, servers, clouds, computing nodes, edge computing nodes, vehicles, roadside units (RSUs), pedestrians, motorcycles, and road workers with communication apparatuses.

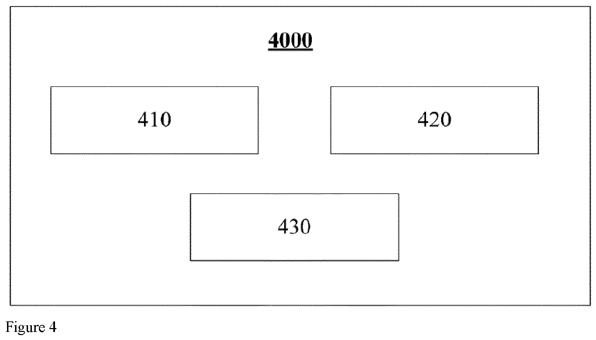

Figure 4 shows a schematic structural diagram for a track prediction device 4000 for a server side for communicating with a moving object according to an embodiment of the present invention. As shown in Figure 4, the track prediction device 4000 comprises: a first acquiring apparatus 410, a first sending apparatus 420, and a first receiving apparatus 430. The first acquiring apparatus 410 is configured to calculate first track information on the moving object based on report information on the moving object. The first sending apparatus 420 is configured to send the first track information to the moving object. The first receiving apparatus 430 is configured to receive second track information from the moving object, wherein the second track information is acquired by changing the first track information at least based on an operation performed by a driver.

Although not specifically shown in Figure 4, the track prediction device 4000 may further comprise: a second acquiring apparatus, for acquiring third track information on the moving object at least based on the second track information; a second sending apparatus, for sending the third track information to the moving object; and a second receiving apparatus, for receiving fourth track information from the moving object, wherein the fourth track information is acquired by changing the third track information at least based on an operation performed by a driver.

In various embodiments, the track prediction device 2000 for a moving object or the track prediction device 4000 for a server side may be implemented in the form of hardware, software, or a combination thereof. For example, the track prediction device 2000 or 4000 may be configured to be implemented in the form of a processor operated by a predetermined program and a memory configured to store the program, and may provide a predetermined program to implement each of the operations that constitute the track prediction methods according to various exemplary embodiments of the present invention.

In summary, in a track prediction solution provided by the present invention, a predicted track is sent to a moving object by a server side; the moving object changes the received track and then sends the changed predicted track back to the server side. Thus, in the entire track prediction solution, the advantages of the high computing capabilities of a server side and the precise movement state of a moving object may be fully utilized. Moreover, a track prediction method of the present invention may be continuously performed iteratively, so that the benchmark used each time for track prediction reflects the actual situation more accurately. In addition, with a track prediction solution provided by the present invention, an operation performed by a driver is considered during track prediction, so that a more accurate final track prediction result may be obtained.

It should be noted that some of the block diagrams shown in the drawings represent functional entities that do not necessarily correspond to physically or logically independent entities. These functional entities may be implemented in the form of software, or implemented in one or more hardware modules or integrated circuits, or implemented in different networks and/or processor devices and/or microcontroller devices.

The above-described examples mainly explain a track prediction solution provided by the present invention. Although only some embodiments of the present invention have been described, those of ordinary skill in the art should understand that the present invention may be implemented in many other forms without departing from the scope of the invention, which is defined by the appended claims. Therefore, the examples and embodiments described are construed as illustrative rather than restrictive. Without departing from the scope of the present invention as defined by the claims, the present invention may cover various modifications and substitutions.

## Claims

1. Track prediction method (1000) performed by a track prediction device (2000) for a moving object, wherein the moving object is a motor vehicle, a non-motor vehicle or a pedestrian, the method comprising:
receiving (S110) a first predicted track of the moving object from a server side;
changing (S120) the first predicted track at least based on a first operation associated with the moving object so as to acquire a second predicted track;
sending (S130) the second predicted track to the server side;
receiving a third predicted track of the moving object from the server side, the third predicted track being determined, by a track prediction device (4000) for the server side, at least on the basis of the second predicted track;
changing the third predicted track at least based on a second operation associated with the moving object so as to acquire a fourth predicted track; and
sending the fourth predicted track to the server side,
wherein each of the first and second operations is an operation performed by a driver if the moving object is the motor vehicle or the non-motor vehicle, or a movement performed by the pedestrian if the moving object is the pedestrian,
wherein said changing of the first, respectively third predicted track to acquire the second, respectively fourth predicted track comprises:
calculating a respective moving object predicted track based not only on the current track of the moving object but also on the first, respectively second operation performed by the driver and, when the moving object is a motor vehicle or a non-motor vehicle, a state of the moving object, the current track of the moving object being a current position and speed obtained from reports received at the server side from the moving object;
changing the first, respectively third predicted track by combining with weighting the first, respectively third predicted track and each of the respective moving object predicted tracks, so as to acquire the second or fourth predicted track.

2. Track prediction method (1000) according to Claim 1, wherein the first predicted track is determined by the server side based on report information on the moving object.

3. Track prediction method (1000) according to Claim 2, wherein the report information on the moving object includes at least one or more of the following: current position of the moving object, current motion information on the moving object, current control information on the moving object, historical location of the moving object, historical motion information on the moving object, and historical control information on the moving object.

4. Track prediction method (1000) according to Claim 1, wherein the first predicted track and/or the second predicted track comprise at least one or more of the following: predicted position, predicted speed, predicted course, and predicted acceleration.

5. Track prediction method (1000) according to Claim 1, wherein operations performed by the driver include an accelerating operation and a braking operation.

6. Track prediction method (1000) according to Claim 1, wherein the state of the moving object include engine speed, motor speed, and/or throttle state.

7. Track prediction device (2000) for a moving object, wherein the moving object is a motor vehicle, a non-motor vehicle or a pedestrian, the track prediction device comprising:
a first receiving apparatus (210), for receiving a first predicted track of the moving object from a server side;
a first changing apparatus (220), configured to change the first predicted track at least based on a first operation associated with the moving object, so as to acquire a second predicted track;
a first sending apparatus (230), for sending the second predicted track to the server side;
a second receiving apparatus, for receiving a third predicted track of the moving object from the server side, the third predicted track being determined, by a track prediction device (4000) for the server side, at least on the basis of the second predicted track;
a second changing apparatus, configured to change the third predicted track at least based on a second operation associated with the moving object, so as to acquire a fourth predicted track; and
a second sending apparatus, for sending the fourth predicted track to the server side,
wherein each of the first and second operations associated with the moving object is an operation performed by a driver if the moving object is the motor vehicle or a movement performed by the pedestrian if the moving object is the pedestrian,
wherein each of the first changing apparatus and the second changing apparatus is configured to:
calculate a respective moving object predicted track based not only on the current track of the moving object but also on the first, respectively second operation performed by the driver or, when the moving object is a motor vehicle or a non-motor vehicle, a state of the moving object, the current track of the moving object being a current position and speed obtained from reports received at the server side from the moving object; and
change the first, respectively third predicted track by combining with weighting the first, respectively third predicted track and each of the respective moving object predicted tracks, so as to acquire the second or fourth predicted track.

8. Track prediction device (2000) according to Claim 7, wherein the first predicted track is determined by the server side based on report information on the moving object.

9. Track prediction device (2000) according to Claim 8, wherein report information on the moving object includes at least one or more of the following: current position of the moving object, current motion information on the moving object, current control information on the moving object, historical location of the moving object, historical motion information on the moving object, and historical control information on the moving object.

10. Track prediction device (2000) according to Claim 7, wherein the first predicted track and/or the second predicted track comprise at least one or more of the following: predicted position, predicted speed, predicted course, and predicted acceleration.

11. Track prediction device (2000) according to Claim 7, wherein operations performed by the driver include an accelerating operation and a braking operation.

12. Track prediction device (2000) according to Claim 7, wherein states of the moving object include engine speed, motor speed, and/or throttle state.

13. Automobile, comprising the track prediction device (2000) for a moving object according to any one of Claims 7 to 12.

14. Computer storage medium, wherein the medium comprises an instruction that, when executed, implements the track prediction method (1000) according to any one of Claims 1 to 6.

## Patentansprüche

1. Bahnvorhersageverfahren (1000), das von einer Bahnvorhersagevorrichtung (2000) für ein sich bewegendes Objekt durchgeführt wird, wobei das sich bewegende Objekt ein Kraftfahrzeug, ein Nichtkraftfahrzeug oder ein Fußgänger ist, wobei das Verfahren Folgendes umfasst:
Empfangen (S110) einer ersten vorhergesagten Bahn des sich bewegenden Objekts von einer Serverseite;
Ändern (S120) der ersten vorhergesagten Bahn mindestens auf Basis einer ersten Operation, die mit dem sich bewegenden Objekt verknüpft ist, um eine zweite vorhergesagte Bahn zu erfassen;
Senden (S130) der zweiten vorhergesagten Bahn an die Serverseite; Empfangen einer dritten vorhergesagten Bahn des sich bewegenden Objekts von der Serverseite, wobei die dritte vorhergesagte Bahn mindestens auf Basis der zweiten vorhergesagten Bahn von einer Bahnvorhersagevorrichtung (4000) für die Serverseite bestimmt wird;
Ändern der dritten vorhergesagten Bahn mindestens auf Basis einer zweiten Operation, die mit dem sich bewegenden Objekt verknüpft ist, um eine vierte vorhergesagte Bahn zu erfassen; und
Senden der vierten vorhergesagten Bahn an die Serverseite, wobei jede der ersten und der zweiten Operation eine Operation ist, die von einem Fahrer durchgeführt wird, wenn das sich bewegende Objekt das Kraftfahrzeug oder das Nichtkraftfahrzeug ist, oder eine Bewegung, die vom Fußgänger durchgeführt wird, wenn das sich bewegende Objekt der Fußgänger ist, wobei das Ändern der ersten bzw. der dritten vorhergesagten Bahn, um die zweite bzw. die vierte vorhergesagte Bahn zu erfassen, Folgendes umfasst:
Berechnen einer jeweiligen vorhergesagten Bahn eines sich bewegenden Objekts nicht nur auf Basis der aktuellen Bahn des sich bewegenden Objekts, sondern auch auf der ersten bzw. der zweiten Operation, die vom Fahrer durchgeführt wird, und, wenn das sich bewegende Objekt ein Kraftfahrzeug oder ein Nichtkraftfahrzeug ist, eines Zustands des sich bewegenden Objekts, wobei die aktuelle Bahn des sich bewegenden Objekts eine aktuelle Position und Geschwindigkeit ist, die aus Berichten erhalten werden, die auf der Serverseite vom sich bewegenden Objekt empfangen werden;
Ändern der ersten bzw. der dritten vorhergesagten Bahn durch Kombinieren der ersten bzw. der dritten vorhergesagten Bahn und jeder der jeweiligen vorhergesagten Bahnen des sich bewegenden Objekts mit einer Gewichtung, um die zweite oder die vierte vorhergesagte Bahn zu erfassen.

2. Bahnvorhersageverfahren (1000) nach Anspruch 1, wobei die erste vorhergesagte Bahn von der Serverseite auf Basis von Berichtsinformationen über das sich bewegende Objekt bestimmt wird.

3. Bahnvorhersageverfahren (1000) nach Anspruch 2, wobei die Berichtsinformationen über das sich bewegende Objekt mindestens eines oder mehreres von Folgendem beinhalten: aktuelle Position des sich bewegenden Objekts, aktuelle Bewegungsinformationen über das sich bewegende Objekt, aktuelle Steuerinformationen über das sich bewegende Objekt, historischer Standort des sich bewegenden Objekts, historische Bewegungsinformationen über das sich bewegende Objekt und historische Steuerinformationen über das sich bewegende Objekt.

4. Bahnvorhersageverfahren (1000) nach Anspruch 1, wobei die erste vorhergesagte Bahn und/oder die zweite vorhergesagte Bahn mindestens eines oder mehreres von Folgendem umfassen: vorhergesagte Position, vorhergesagte Geschwindigkeit, vorhergesagter Kurs und vorhergesagte Beschleunigung.

5. Bahnvorhersageverfahren (1000) nach Anspruch 1, wobei Operationen, die vom Fahrer durchgeführt werden, eine Beschleunigungsoperation und eine Bremsoperation beinhalten.

6. Bahnvorhersageverfahren (1000) nach Anspruch 1, wobei die Zustände des sich bewegenden Objekts Verbrennungsmotordrehzahl, Motordrehzahl und/oder Gaspedalzustand beinhalten.

7. Bahnvorhersagevorrichtung (2000) für ein sich bewegendes Objekt, wobei das sich bewegende Objekt ein Kraftfahrzeug, ein Nichtkraftfahrzeug oder ein Fußgänger ist, wobei die Bahnvorhersagevorrichtung Folgendes umfasst:
eine erste Empfangseinrichtung (210) zum Empfangen einer ersten vorhergesagten Bahn des sich bewegenden Objekts von einer Serverseite;
eine erste Änderungseinrichtung (220), die dazu ausgelegt ist, die erste vorhergesagte Bahn mindestens auf Basis einer ersten Operation zu ändern, die mit dem sich bewegenden Objekt verknüpft ist, um eine zweite vorhergesagte Bahn zu erfassen;
eine erste Sendeeinrichtung (230) zum Senden der zweiten vorhergesagten Bahn an die Serverseite;
eine zweite Empfangseinrichtung zum Empfangen einer dritten vorhergesagten Bahn des sich bewegenden Objekts von der Serverseite, wobei die dritte vorhergesagte Bahn mindestens auf Basis der zweiten vorhergesagten Bahn von einer Bahnvorhersagevorrichtung (4000) für die Serverseite bestimmt wird;
eine zweite Änderungseinrichtung, die dazu ausgelegt ist, die dritte vorhergesagte Bahn mindestens auf Basis einer zweiten Operation zu ändern, die mit dem sich bewegenden Objekt verknüpft ist, um eine vierte vorhergesagte Bahn zu erfassen; und
eine zweite Sendeeinrichtung zum Senden der vierten vorhergesagten Bahn an die Serverseite,
wobei jede der ersten und der zweiten Operation, die mit dem sich bewegenden Objekt verknüpft sind, eine Operation ist, die von einem Fahrer durchgeführt wird, wenn das sich bewegende Objekt das Kraftfahrzeug ist, oder eine Bewegung, die vom Fußgänger durchgeführt wird, wenn das sich bewegende Objekt der Fußgänger ist,
wobei jede der ersten Änderungseinrichtung und der zweiten Änderungseinrichtung zu Folgendem ausgelegt ist:
Berechnen einer jeweiligen vorhergesagten Bahn eines sich bewegenden Objekts nicht nur auf Basis der aktuellen Bahn des sich bewegenden Objekts, sondern auch auf der ersten bzw. der zweiten Operation, die vom Fahrer durchgeführt wird, oder, wenn das sich bewegende Objekt ein Kraftfahrzeug oder ein Nichtkraftfahrzeug ist, eines Zustands des sich bewegenden Objekts, wobei die aktuelle Bahn des sich bewegenden Objekts eine aktuelle Position und Geschwindigkeit ist, die aus Berichten erhalten werden, die auf der Serverseite vom sich bewegenden Objekt empfangen werden; und
Ändern der ersten bzw. der dritten vorhergesagten Bahn durch Kombinieren der ersten bzw. der dritten vorhergesagten Bahn und jeder der jeweiligen vorhergesagten Bahnen des sich bewegenden Objekts mit einer Gewichtung, um die zweite oder die vierte vorhergesagte Bahn zu erfassen.

8. Bahnvorhersagevorrichtung (2000) nach Anspruch 7, wobei die erste vorhergesagte Bahn von der Serverseite auf Basis von Berichtsinformationen über das sich bewegende Objekt bestimmt wird.

9. Bahnvorhersagevorrichtung (2000) nach Anspruch 8, wobei Berichtsinformationen über das sich bewegende Objekt mindestens eines oder mehreres von Folgendem beinhalten: aktuelle Position des sich bewegenden Objekts, aktuelle Bewegungsinformationen über das sich bewegende Objekt, aktuelle Steuerinformationen über das sich bewegende Objekt, historischer Standort des sich bewegenden Objekts, historische Bewegungsinformationen über das sich bewegende Objekt und historische Steuerinformationen über das sich bewegende Objekt.

10. Bahnvorhersagevorrichtung (2000) nach Anspruch 7, wobei die erste vorhergesagte Bahn und/oder die zweite vorhergesagte Bahn mindestens eines oder mehreres von Folgendem umfassen: vorhergesagte Position, vorhergesagte Geschwindigkeit, vorhergesagter Kurs und vorhergesagte Beschleunigung.

11. Bahnvorhersagevorrichtung (2000) nach Anspruch 7, wobei Operationen, die vom Fahrer durchgeführt werden, eine Beschleunigungsoperation und eine Bremsoperation beinhalten.

12. Bahnvorhersagevorrichtung (2000) nach Anspruch 7, wobei die Zustände des sich bewegenden Objekts Verbrennungsmotordrehzahl, Motordrehzahl und/oder Gaspedalzustand beinhalten.

13. Automobil, das die Bahnvorhersagevorrichtung (2000) für ein sich bewegendes Objekt nach einem der Ansprüche 7 bis 12 umfasst.

14. Computerspeichermedium, wobei das Medium eine Anweisung umfasst, die, wenn sie ausgeführt wird, das Bahnvorhersageverfahren (1000) nach einem der Ansprüche 1 bis 6 implementiert.

## Revendications

1. Procédé (1000) de prédiction de trajectoire réalisé par un dispositif (2000) de prédiction de trajectoire pour un objet mouvant, l'objet mouvant étant un véhicule motorisé, un véhicule non motorisé ou un piéton, le procédé comportant les étapes consistant à :
recevoir (S110) une première trajectoire prédite de l'objet mouvant en provenance d'un côté serveur ;
modifier (S120) la première trajectoire prédite au moins sur la base d'une première opération associée à l'objet mouvant de façon à acquérir une deuxième trajectoire prédite ;
envoyer (S130) la deuxième trajectoire prédite au côté serveur ; recevoir une troisième trajectoire prédite de l'objet mouvant en provenance du côté serveur, la troisième trajectoire prédite étant déterminée, par un dispositif (4000) de prédiction de trajectoire pour le côté serveur, au moins sur la base de la deuxième trajectoire prédite ;
modifier la troisième trajectoire prédite au moins sur la base d'une deuxième opération associée à l'objet mouvant de façon à acquérir une quatrième trajectoire prédite ; et
envoyer la quatrième trajectoire prédite au côté serveur, chacune des première et deuxième opérations étant une opération réalisée par un conducteur si l'objet mouvant est le véhicule motorisé ou le véhicule non motorisé, ou un mouvement réalisé par le piéton si l'objet mouvant est le piéton, ladite modification de la première, respectivement de la troisième trajectoire prédite pour acquérir la deuxième, respectivement la quatrième trajectoire prédite comportant les étapes consistant à :
calculer une trajectoire prédite respective d'objet mouvant sur la base non seulement de la trajectoire actuelle de l'objet mouvant mais également de la première, respectivement la deuxième opération réalisée par le conducteur et, lorsque l'objet mouvant est un véhicule motorisé ou un véhicule non motorisé, un état de l'objet mouvant, la trajectoire actuelle de l'objet mouvant étant une position et une vitesse actuelles obtenues à partir de comptes rendus reçus côté serveur en provenance de l'objet mouvant ;
modifier la première, respectivement la troisième trajectoire prédite en combinant avec une pondération la première, respectivement la troisième trajectoire prédite et chacune des trajectoires prédites respectives d'objet mouvant, de façon à acquérir la deuxième ou quatrième trajectoire prédite.

2. Procédé (1000) de prédiction de trajectoire selon la revendication 1, la première trajectoire prédite étant déterminée par le côté serveur d'après des informations de comptes rendus sur l'objet mouvant.

3. Procédé (1000) de prédiction de trajectoire selon la revendication 2, les informations de comptes rendus sur l'objet mouvant comprenant au moins une ou plusieurs des informations suivantes : position actuelle de l'objet mouvant, informations actuelles de mouvement sur l'objet mouvant, informations actuelles de commande sur l'objet mouvant, localisation historique de l'objet mouvant, informations historiques de mouvement sur l'objet mouvant, et informations historiques de commande sur l'objet mouvant.

4. Procédé (1000) de prédiction de trajectoire selon la revendication 1, la première trajectoire prédite et/ou la deuxième trajectoire prédite comportant au moins un ou plusieurs des éléments suivants : position prédite, vitesse prédite, cap prédit et accélération prédite.

5. Procédé (1000) de prédiction de trajectoire selon la revendication 1, des opérations réalisées par le conducteur incluant une opération d'accélération et une opération de freinage.

6. Procédé (1000) de prédiction de trajectoire selon la revendication 1, les états de l'objet mouvant incluant un régime de machine motrice, une vitesse de moteur et/ou un état de commande des gaz.

7. Dispositif (2000) de prédiction de trajectoire pour un objet mouvant, l'objet mouvant étant un véhicule motorisé, un véhicule non motorisé ou un piéton, le dispositif de prédiction de trajectoire comportant :
un premier appareil (210) de réception, servant à recevoir une première trajectoire prédite de l'objet mouvant en provenance d'un côté serveur ;
un premier appareil (220) de modification, configuré pour modifier la première trajectoire prédite au moins sur la base d'une première opération associée à l'objet mouvant, de façon à acquérir une deuxième trajectoire prédite ;
un premier appareil (230) d'émission, servant à envoyer la deuxième trajectoire prédite au côté serveur ;
un deuxième appareil de réception, servant à recevoir une troisième trajectoire prédite de l'objet mouvant en provenance du côté serveur, la troisième trajectoire prédite étant déterminée, par un dispositif (4000) de prédiction de trajectoire pour le côté serveur, au moins sur la base de la deuxième trajectoire prédite ;
un deuxième appareil de modification, configuré pour modifier la troisième trajectoire prédite au moins sur la base d'une deuxième opération associée à l'objet mouvant, de façon à acquérir une quatrième trajectoire prédite ; et
un deuxième appareil d'émission, servant à envoyer la quatrième trajectoire prédite au côté serveur,
chacune des première et deuxième opérations associées à l'objet mouvant étant une opération réalisée par un conducteur si l'objet mouvant est le véhicule motorisé ou un mouvement réalisé par le piéton si l'objet mouvant est le piéton,
chaque appareil parmi le premier appareil de modification et le deuxième appareil de modification étant configuré pour :
calculer une trajectoire prédite respective d'objet mouvant sur la base non seulement de la trajectoire actuelle de l'objet mouvant mais également de la première, respectivement la deuxième opération réalisée par le conducteur ou, lorsque l'objet mouvant est un véhicule motorisé ou un véhicule non motorisé, un état de l'objet mouvant, la trajectoire actuelle de l'objet mouvant étant une position et une vitesse actuelles obtenues à partir de comptes rendus reçus côté serveur en provenance de l'objet mouvant ; et
modifier la première, respectivement la troisième trajectoire prédite en combinant avec une pondération la première, respectivement la troisième trajectoire prédite et chacune des trajectoires prédites respectives d'objet mouvant, de façon à acquérir la deuxième ou quatrième trajectoire prédite.

8. Dispositif (2000) de prédiction de trajectoire selon la revendication 7, la première trajectoire prédite étant déterminée par le côté serveur d'après des informations de comptes rendus sur l'objet mouvant.

9. Dispositif (2000) de prédiction de trajectoire selon la revendication 8, des informations de comptes rendus sur l'objet mouvant comprenant au moins une ou plusieurs des informations suivantes : position actuelle de l'objet mouvant, informations actuelles de mouvement sur l'objet mouvant, informations actuelles de commande sur l'objet mouvant, localisation historique de l'objet mouvant, informations historiques de mouvement sur l'objet mouvant, et informations historiques de commande sur l'objet mouvant.

10. Dispositif (2000) de prédiction de trajectoire selon la revendication 7, la première trajectoire prédite et/ou la deuxième trajectoire prédite comportant au moins un ou plusieurs des éléments suivants : position prédite, vitesse prédite, cap prédit et accélération prédite.

11. Dispositif (2000) de prédiction de trajectoire selon la revendication 7, des opérations réalisées par le conducteur incluant une opération d'accélération et une opération de freinage.

12. Dispositif (2000) de prédiction de trajectoire selon la revendication 7, des états de l'objet mouvant incluant un régime de machine motrice, une vitesse de moteur et/ou un état de commande des gaz.

13. Automobile, comportant le dispositif (2000) de prédiction de trajectoire pour objet mouvant selon l'une quelconque des revendications 7 à 12.

14. Support de stockage informatique, le support comportant une instruction qui, lorsqu'elle est exécutée, met en œuvre le procédé (1000) de prédiction de trajectoire selon l'une quelconque des revendications 1 à 6.
